# EUROPEAN PATENT SPECIFICATION

(11) **EP 3 301 889 B1**
(45) Date of publication and mention of the grant of the patent: **29.10.2025**
(21) Application number: 17193035.7
(22) Date of filing: 26.09.2017
(51) Int. Cl.: H04M 1/60, G06F 3/14, H04M 1/725

(54) **DISPLAY METHOD, DISPLAY APPARATUS AND DRIVING RECORDER**
ANZEIGEVERFAHREN, ANZEIGEVORRICHTUNG UND FAHRDATENSCHREIBER
PROCÉDÉ D'AFFICHAGE, AFFICHEUR ET ENREGISTREUR DE CONDUITE

(30) Priority: 28.09.2016 WO PCT/CN2016/100544
(43) Date of publication of application: 04.04.2018
(73) Proprietor: Beijing Xiaomi Mobile Software Co., Ltd., Beijing 100085 (CN)
(72) Inventor: CHENG, Yue, Beijing, Beijing 100085 (CN); XIE, Yan, Beijing, Beijing 100085 (CN); CUI, Qiqi, Beijing, Beijing 100085 (CN)
(74) Representative: Dompatent Partnerschaft von Patent- und Rechtsanwälten mbB

(56) References cited:
- EP-A1- 3 012 588
- WO-A1-2016/147367
- GB-A- 2 502 586
- US-A1- 2003 216 861
- US-A1- 2013 190 978
- US-A1- 2013 274 997
- US-A1- 2015 017 956
- US-A1- 2015 350 413
- US-A1- 2016 018 943

## Description

### TECHNICAL FIELD

The present disclosure generally relates to the field of communication technology, and more particularly, to a display method, a display apparatus and a driving recorder.

### BACKGROUND

With the development of economy, the popularity of cars gradually increases, and driving safety has also been paid more and more attention.

A user may need to perform dialing, answering the phone, viewing messages and other operations on his/her mobile phone when he/she is driving a car. For example, when the mobile phone used by the user has an incoming call, the user needs to answer the phone, and the user needs to look for his/her mobile phone for answering at that time, which causes large safety risk. Related technologies are known from a patent publication document EP 3012588A1.

### SUMMARY

The present disclosure is defined in the independent claims 1 and 6, and the preferable features according to the present invention are defined in the dependent claims. Any embodiment in the present disclosure that does not fall within the scope of the present invention should be regarded as an example for understanding the present invention.

It is to be understood that both the foregoing general description and the following detailed description are exemplary only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram of an implementing environment involved in various embodiments of the present disclosure;
Fig. 2 is a flow chart of a display method provided by an exemplary embodiment of the present disclosure;
Fig. 3 is a flow chart of a display method provided by another exemplary embodiment of the present disclosure;
Fig. 4 is a schematic diagram of the displaying involved in an exemplary embodiment of the present disclosure;
Fig. 5 is a flow chart of a display method provided by another exemplary embodiment of the present disclosure;
Fig. 6 is a flow chart of a display method provided by another exemplary embodiment of the present disclosure;
Fig. 7A is a schematic diagram of the displaying involved in another exemplary embodiment of the present disclosure;
Fig. 7B is a schematic diagram of the displaying involved in another exemplary embodiment of the present disclosure;
Fig. 8 is a schematic diagram of the displaying involved in another exemplary embodiment of the present disclosure;
Fig. 9 is a schematic diagram of the displaying involved in another exemplary embodiment of the present disclosure;
Fig. 10 is a schematic diagram of the displaying involved in another exemplary embodiment of the present disclosure;
Fig. 11 is a block diagram of a display apparatus provided by an exemplary embodiment of the present disclosure;
Fig. 12 is a block diagram of a display apparatus provided by another exemplary embodiment of the present disclosure;
Fig. 13 is a block diagram of a display apparatus provided by another exemplary embodiment of the present disclosure; and
Fig. 14 is a structural schematic diagram of a driving recorder provided by another exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

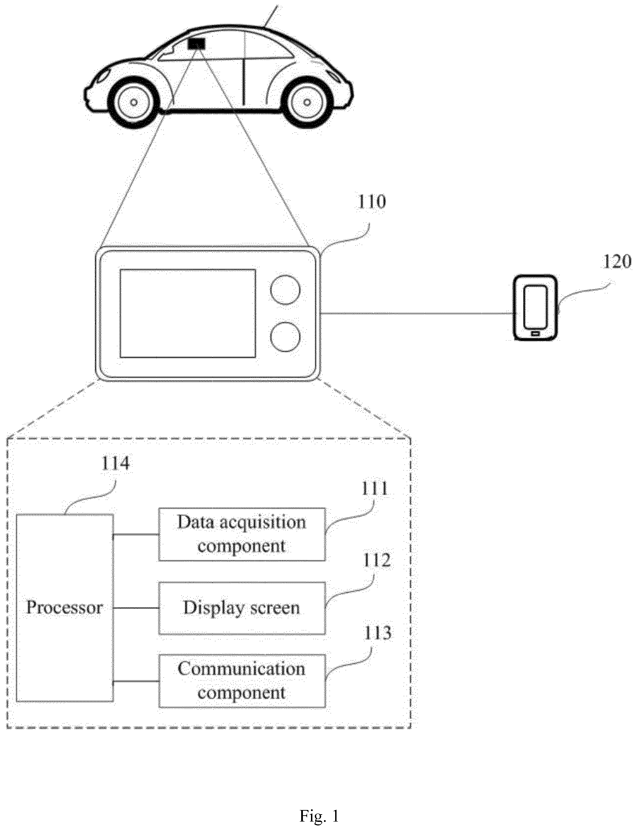

Fig. 1 is a schematic diagram of an implementing environment involved in various embodiments of the present disclosure. The implementing environment may include a driving recorder 110 and a terminal device 120.

Usually, the driving recorder 110 is installed in a vehicle, and the driving recorder 110 generally includes a data acquisition module 111 such as a camera and a microphone, or the like. The data acquisition unit 111 is used for acquiring driving data such as images and sounds during driving. Optionally, the driving recorder 110 further includes a display screen 112 for displaying the acquired driving data in real time. Optionally, the display screen 112 in the driving recorder 110 is a touch display screen. The driving recorder 110 is further used to receive and respond to touch operations acting on the touch display screen.

Tthe driving recorder 110 further includes a communication component 113. The driving recorder 110 establishes a communication connection with the terminal device 120 through the communication component 113 and transmits data. Optionally, the communication component 113 in the driving recorder 110 is a wireless communication component and/or a hardware communication interface. Optionally, the wireless communication component includes at least one of a WiFi (Wireless-Fidelity) module, a Bluetooth module, a NFC (Near Field Communication) module and a Zigbee (Zigzag Flying of Bees) module. Optionally, the hardware communication interface includes at least one of a USB (Universal Serial Bus) type A interface, a USB type B interface, a Mini USB type A interface, a Mini USB type B interface, a Mini USB AB type interface, a Micro USB type Interface, a Micro USB Type B interface, a USB Type-C interface and a Lightning interface.

Optionally, the driving recorder 110 further includes a processor 114. Each of the data acquisition component 111, the display screen 112, and the communication component 113 is connected to the processor 114. The processor 114 is used for executing various instructions to implement various functions of the driving recorder 110. In actual implementation, the driving recorder 110 further includes a memory, a speed sensor, a GPS (Global Positioning System), a power supply line, and so on (not shown in Fig. 1), which will not be given unnecessary details in the present embodiment.

The terminal device 120 may be a mobile phone, a tablet computer, an electronic book reader, an MP3 (Moving Picture Experts Group Audio Layer III) player, an MP4 (Moving Picture Experts Group Audio Layer IV) player, a laptop, a desktop computer, and so on. The terminal device 120 includes a communication component. The meaning of the communication component in the terminal device 120 may combine that of the communication component in the driving recorder 110, which will not be given unnecessary details in the present embodiment.

The driving recorder 110 establishes a wireless communication connection with the wireless communication component in the terminal device 120 through the wireless communication component. Alternatively, the driving recorder 110, through its hardware communication interface, is connected to the hardware communication interface of the terminal device 120.

In other optional embodiments, the driving recorder 110 may not be directly connected to the terminal device 120. Instead, the driving recorder 110 may be connected to the terminal device 120 through a server. Optionally, both the driving recorder 110 and the terminal device 120 are installed with a client having a communication function. The server is a backend server of the clients. The driving recorder 110 registers a first user account in the client, and the terminal device 120 registers a second user account in the client. The server transfers data for the first user account and the second user account, thereby realizing the communication connection between the driving recorder 110 and the terminal device 120. In the embodiment, the server may be one server, a server cluster or a cloud computing center composed of a number of servers. The present embodiment will be described by only taking the implementation environment shown in Fig. 1 as an example.

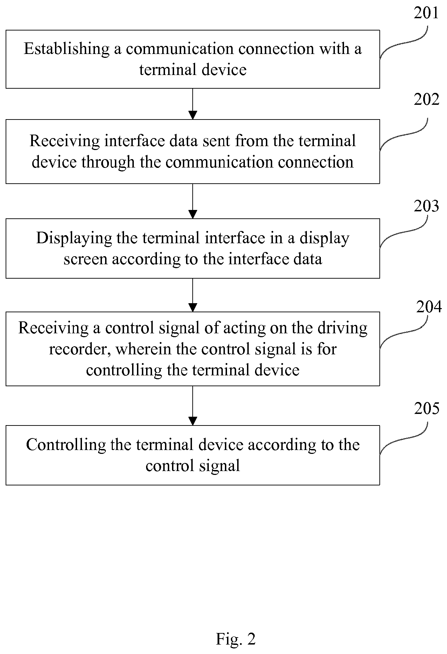

Fig. 2 is a flow chart of a display method provided by an embodiment of the present disclosure. The present embodiment is exemplified by applying the display method to the driving recorder shown in Fig. 1. The method includes following steps.

In step 201, a communication connection is established with a terminal device through a communication component.

A distance between the terminal device and the driving recorder is less than a predetermined distance threshold and the predetermined distance threshold is a system preset value or a user defined value. The predetermined distance threshold is a preset value determined by a system according to a type of the communication component or a predefined value determined by a user. Optionally, the terminal device and the driving recorder are located in the same vehicle.

It should be noted that, in other embodiments, if the driving recorder and the terminal device are connected through a server, the distance between the terminal device and the driving recorder may be not less than a predetermined distance threshold.

In step 202, interface data sent from the terminal device is received through the communication connection.

In the embodiment, the interface data is data of a terminal interface displayed by the terminal device in real time.

In step 203, the terminal interface is displayed in a display screen according to the interface data.

In step 204, a control signal of acting on the driving recorder is received, wherein the control signal is for controlling the terminal device.

In step 205, the terminal device is controlled according to the control signal.

To sum up, according to the display method provided by the embodiment of the present disclosure, after the driving recorder establishes a communication connection with a terminal device, interface data of the terminal device is received through the communication connection and displayed, thus displaying the terminal interface of the terminal device in a display screen of the driving recorder. The driving recorder may further receive a control operation and control the terminal device according to the control operation. Through the present disclosure, it solves a problem of large safety risk caused by a user operating his/her mobile phone in the process of driving. Since the user may directly view the message of the terminal device in the display screen of the driving recorder and perform appropriate operations during the driving process, without operating the terminal device, safety of driving is improved.

In the above step 202, when the driving recorder receives the interface data sent from the terminal device, there are three different manners for receiving as follows.

The first manner, which is not covered by the present invention as claimed: after the driving recorder establishes a communication connection with the terminal device, the interface data sent from the terminal device is received in real time.

Optionally, the terminal device automatically sends the interface data to the driving recorder after establishing a communication connection with the driving recorder; alternatively, the terminal device sends the interface data to the driving recorder when establishing a communication connection with the driving recorder and receiving a trigger operation. For example, after the terminal device establishes a communication connection with the driving recorder, a prompt message is displayed. The prompt message is used for prompting whether or not to send the interface data to the driving recorder. When receiving a trigger operation which confirms to send the interface data to the driving recorder, the terminal device starts to send the interface data to the driving recorder.

The second manner: after the driving recorder establishes a communication connection with the terminal device, when the terminal device receives a notification message, the driving recorder receives the interface data sent from the terminal device.

The third manner, which is not covered by the present invention as claimed: when the driving recorder establishes a communication connection with the terminal device and a vehicle where the driving recorder is located is in a driving state, the driving recorder receives the interface data sent from the terminal device.

The second manner and the third manner will be described in detail in the following embodiments.

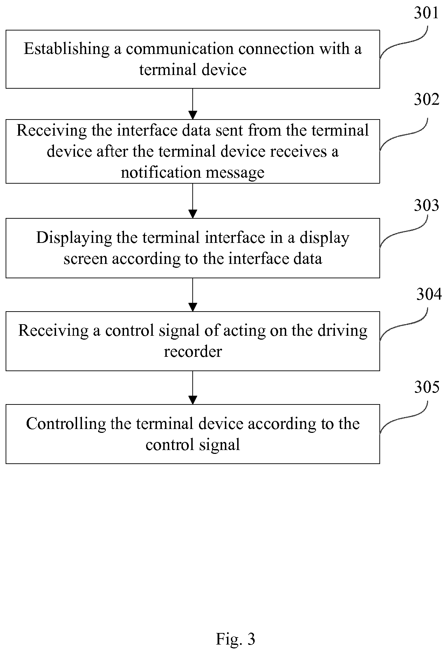

Fig. 3 is a flow chart of a display method provided by the present disclosure. The display method is applied in the driving recorder as shown in Fig. 1, and the driving recorder receives the interface data sent from the terminal device through the second manner. The method includes following steps.

In step 301, a communication connection is established with a terminal device.

In step 302, the interface data sent from the terminal device after the terminal device receives a notification message is received.

The interface data is data of the terminal interface displayed by the terminal device after the terminal device receives the notification message. The notification message includes an incoming call message, a short message and an instant messaging message in the terminal device. In general, when the notification message is an incoming call message, the terminal interface displayed by the terminal device after receiving the notification message is an incoming call interface; when the notification message is a message such as a short message or an instant messaging message, the terminal interface displayed by the terminal device after receiving the notification message is an interface including prompt information for prompting reception of a notification message. Optionally, the prompt information includes a name of the application program corresponding to the notification message, information of a sender who sends the notification message, breviary information of the notification message, and so on.

Optionally, the terminal device sends the interface data to the driving recorder at a predetermined time interval, and correspondingly, the driving recorder receives the interface data sent from the terminal device at the predetermined time interval. Alternatively, when the terminal interface changes, the terminal device sends the interface data of the changed terminal interface to the driving recorder, and correspondingly, the driving recorder receives the interface data sent from the terminal device when the terminal interface of the terminal device changes.

Optionally, the terminal device sends the interface data of the entire terminal interface to the driving recorder, and correspondingly, the driving recorder receives the interface data of the entire terminal interface sent from the terminal device. Alternatively, the terminal device sends the interface data of the current terminal interface which is different from the last terminal interface to the driving recorder, and correspondingly, after the driving recorder receives the first interface data containing the entire terminal interface sent from the terminal device, it receives the interface data of the terminal interface sent from the terminal device which is different from the last terminal interface.

In step 303, the terminal interface is displayed in a display screen according to the interface data.

A corresponding relationship exists between pixel points of the display screen of the driving recorder and pixel points of the display screen of the terminal device. The corresponding relationship is a preset corresponding relationship between logical pixel points of the display screen of the driving recorder and logical pixel points of the display screen of the terminal device, or it is a corresponding relationship obtained by the driving recorder through adaptive calculation. The pixel point in the display screen of the driving recorder is used to display the interface data of a pixel point in the terminal device corresponding to the pixel point in the display screen of the driving recorder. For example, if the pixel point at the first row and the second column of the display screen of the driving recorder corresponds to the pixel point at the first row and the fourth column of the display screen of terminal device, and the display data of the pixel point at the first row and the fourth column of the display screen of terminal device is data A, the data A is displayed in the pixel point at the first row and the second column after the driving recorder receives the interface data.

Optionally, the driving recorder displays the terminal interface in the display screen according to an aspect ratio of the display screen of the terminal device. For example, the display screen of the terminal device is 800*480, the aspect ratio is 5:3; and the display screen of the driving recorder is 1280*720, then the driving recorder displays the display screen in an area of 1200*720, and the rest area may display a background color of black.

In step 304, a control signal of acting on the driving recorder is received.

In the embodiment, the control signal is used to control the terminal device. For example, the control signal is used to answer incoming calls in the terminal device. As another example, the control signal is used to view short messages in the terminal device.

The control signal is a signal of acting on of a physical key the driving recorder. The control signal is a touch signal of acting on the display screen, which is a touch signal of acting on the terminal interface displayed in the display screen.

In step 305, the terminal device is controlled according to the control signal.

Optionally, when the control signal is a signal of acting on the physical key, the driving recorder determines an operation instruction corresponding to the physical key and sends the operation instruction to the terminal device, and the terminal device responds to the operation instruction.

When the control signal is a touch signal, the driving recorder determines a touch position of the touch signal, generates a corresponding operation instruction according to the touch position, sends the operation instruction to the terminal device, and the terminal device responds to the operation instruction. Alternatively, the driving recorder directly sends the touch position of the received touch signal to the terminal device, and the terminal device determines the operation instruction based on a position of the terminal device corresponding to the touch position and responds to the operation instruction.

To sum up, according to the display method provided by the embodiment of the present disclosure, after the driving recorder establishes a communication connection with a terminal device, interface data of the terminal device is received through the communication connection and displayed, thus displaying the terminal interface of the terminal device in a display screen of the driving recorder. The driving recorder may further receive a control operation and control the terminal device according to the control operation. Through the present disclosure, it solves a problem of large safety risk caused by a user operating his/her mobile phone in the process of driving. Since the user may directly view the message of the terminal device in the display screen of the driving recorder and perform appropriate operations during the driving process, without operating the terminal device, safety of driving is improved.

According to the display method provided by the embodiment of the present disclosure, the display screen of the driving recorder may display the display interface of other terminal devices, which enriches display contents of the display screen of the driving recorder, and improves the utilization ratio of the display screen of the driving recorder.

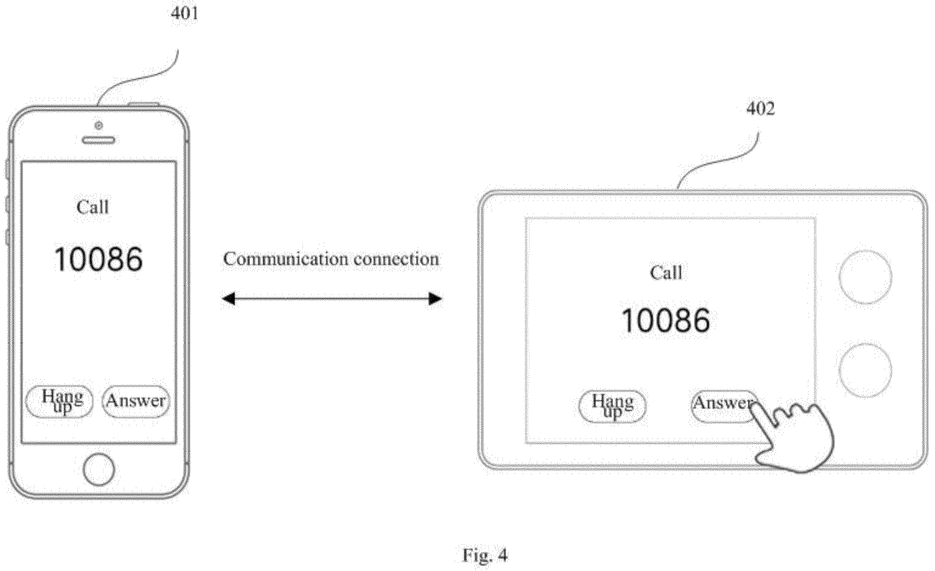

In an exemplary example, as shown in Fig. 4, after the driving recorder establishes a connection with the terminal device, when the terminal device receives an incoming call, the terminal device displays a display interface 401, and at that time, when the driving recorder receives the interface data and the interface data is displayed, the driving recorder displays a display interface 402.

When the user clicks "answer" on the screen of the driving recorder, the terminal device answers the incoming call. At that time, the user may transmit audio through components such as a microphone and handset of the driving recorder, to make a call.

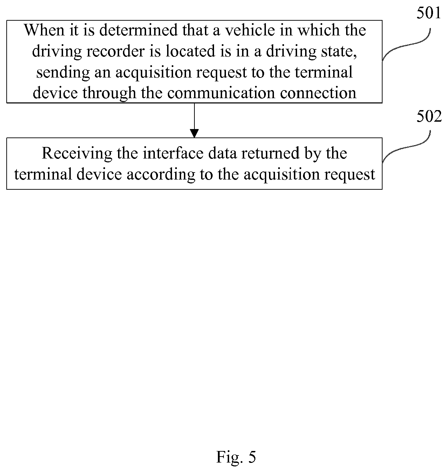

Optionally, when the driving recorder receives the interface data sent from the terminal device through the third manner described above, the above step 302 includes following two steps, as shown in Fig. 5.

In step 501, when it is determined that the vehicle where the driving recorder is positioned is in a driving state, an acquisition request is sent to the terminal device through the communication connection.

Optionally, the driving recorder determines to be in a driving state when a speed sensor determines that the travel speed is greater than 0, and/or, the driving recorder determines to be in a driving state when a GPS determines that the current position has changed, and/or, the driving recorder determines to be in a driving state when an image acquired by the data acquisition component has moved.

In step 502, the interface data returned by the terminal device according to the acquisition request is received.

Optionally, in other optional embodiments based on the above embodiments, when the driving recorder receives the interface data sent from the terminal device by any one of the above three manners, in the above step 303, when the driving recorder displays the terminal interface in the display screen according to the interface data, there are three different implementations.

The first mode: the driving recorder displays, the acquired driving data and the interface data in the terminal device, in the display screen at the same time, the display screen is divided into a first display area and a second display area, a size of the first display area and a size of the second display area are identical or different, and the size of the first display area and the size of the second display area is preset by the user or the system.

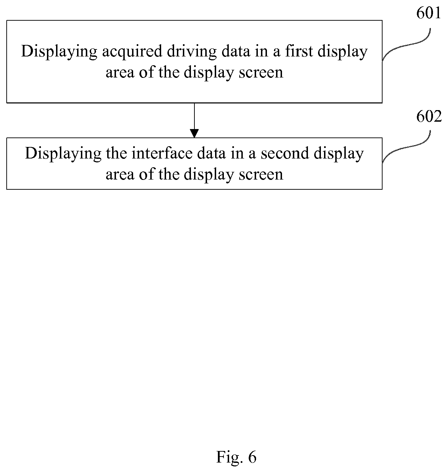

Optionally, the above step 303 includes following two steps, as shown in Fig. 6.

In step 601, the acquired driving data is displayed in the first display area of the display screen.

In step 602, the interface data is displayed in the second display area of the display screen.

In the embodiment, the first display area and the second display area do not overlap each other.

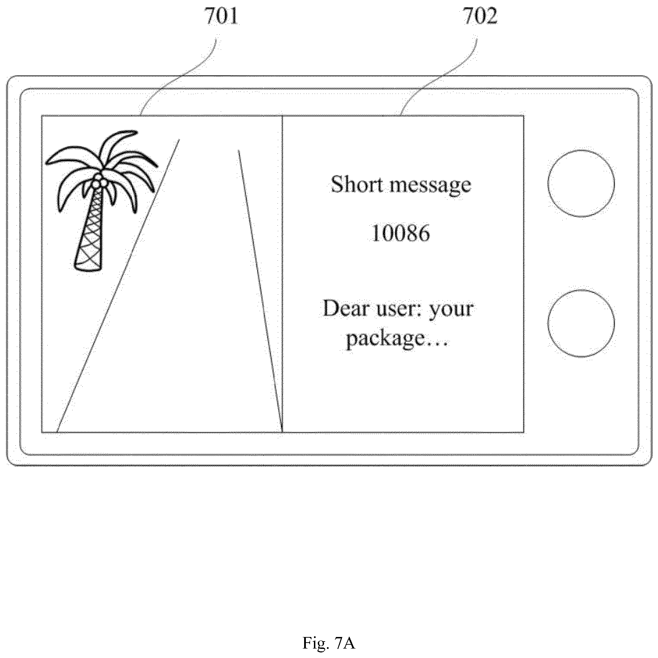

The sizes of the first display area and the second display area are the same or different. The first display area and the second display area are displayed side by side horizontally or vertically in the display screen. Fig. 7A is a schematic diagram of the display of the display screen of the driving recorder. The first display area 701 of the display screen displays the driving data, and the second display area 702 displays the interface data of the terminal device.

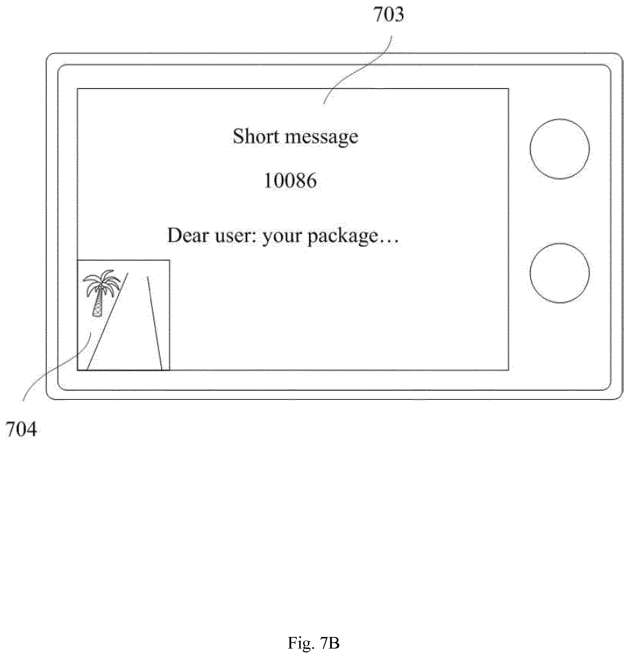

Optionally, the first display area occupies a larger display space than that the second display area occupies; alternatively, the second display area occupies a larger display space than that the first display area occupies. For example, Fig. 7B shows a schematic diagram of the display of the display screen of the driving recorder. The second display area 703 occupies a larger display space than that the first display area 704 occupies.

Sizes of the first display area and the second display area may be preset by the user or the system.

The second mode: the driving recorder displays the driving data in the display screen, and it switches to display the interface data upon the reception of the interface data.

Optionally, the step 303 may be implemented as: if the interface data is received during the display of the acquired driving data, switching to display the interface data.

Optionally, if the driving recorder receives, the interface data of the terminal interface displayed by the terminal device after the terminal device receives a notification message, in the process of displaying the acquired driving data, the driving recorder switches to display the interface data, i.e., the driving recorder switches to display the terminal interface displayed by the terminal device after the terminal device receives a notification message.

Optionally, if the terminal device sends the interface data to the driving recorder upon the receipt of the notification message, the driving recorder switches to display the interface data just upon the receipt of the interface data.

Optionally, if the terminal device sends the interface data to the driving recorder no matter whether the notification message is received or not, the driving recorder determines whether or not the interface data of the notification message is included when the interface data is received. When it is determined that the interface data of the notification message is included, the driving recorder switches to display the interface data.

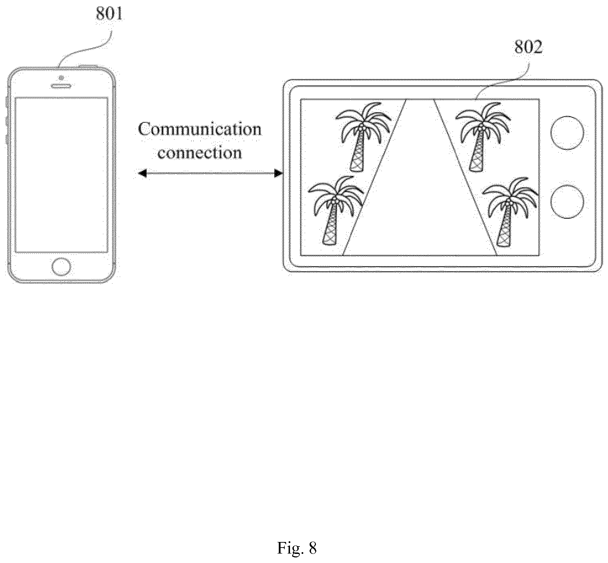

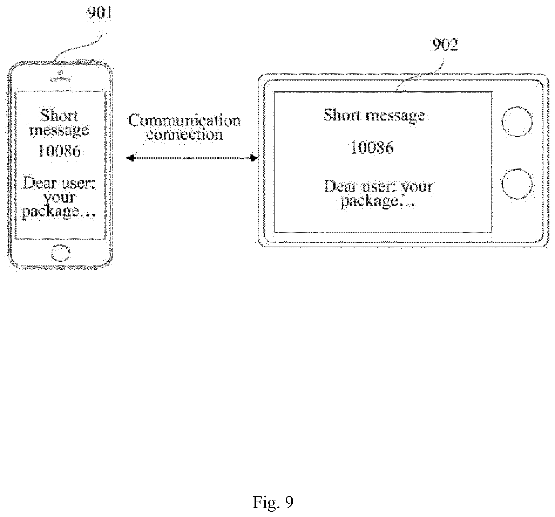

In an exemplary example, as shown in Fig. 8, it is assumed that the terminal device sends the interface data to the driving recorder when receiving the notification message, the terminal device displays a display interface 801 when the notification message is not received, and at that time the display screen of the driving recorder displays the driving data as shown in a display interface 802. When the terminal device receives a short message, it is assumed that, the terminal device displays a display interface 901, the driving recorder switches to display the interface data, and the display screen of the driving recorder is displays a display interface 902, as shown in Fig. 9.

The third mode: the driving recorder switches between the display of the interface data and the display of the driving data according to the received switching operation.

Optionally, the above step 303 may be implemented as: if a switching operation is received during the display of the acquired driving data, switching to display the interface data according to the switching operation.

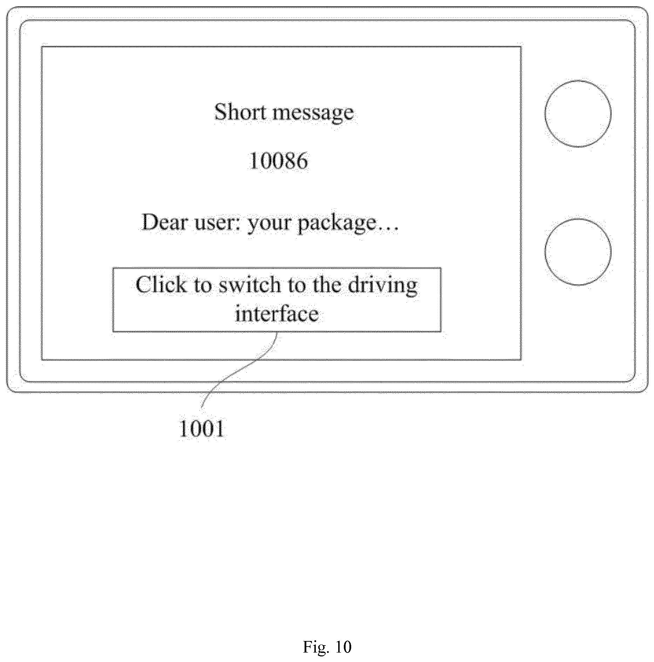

Optionally, the driving recorder displays a first entry in the display screen when displaying the interface data. The first entry is typically a virtual key which switches the display screen to display the driving data when the driving recorder determines that a switching operation is acting on the first entry. In other optional embodiments, the switching operation may also be acting on a physical key of the driving recorder, which is not limited in the present embodiment. As shown in Fig. 10, the driving recorder displays the first entry 1001 when displaying the interface data in the display screen, and the first entry 1001 further displays a prompt text for prompting the function of the first entry.

Optionally, the driving recorder displays a second entry in the display interface when displaying the driving data. When the driving recorder determines that a switching operation is acting on the second entry, it switches to display the interface data.

The following is embodiments of apparatuses according to the present disclosure, which may be configured to perform the methods of the embodiments of the present disclosure. Details not disclosed in the embodiments of apparatuses may be referred to the embodiments of methods of the present disclosure.

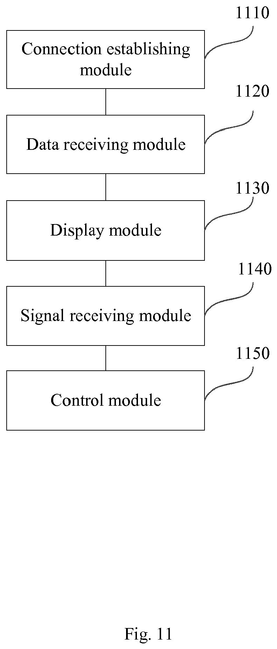

Fig. 11 is a block diagram of a display apparatus provided by an exemplary embodiment of the present disclosure. The apparatus may be implemented as a part of or the entire driving recorder shown in Fig. 1 by hardware, software, or a combination of both. The apparatus includes but not limited to:
a connection establishing module 1110, configured to establish a communication connection with a terminal device through a communication component (113), wherein a distance between the terminal device and the driving recorder is less than a predetermined distance threshold, and the predetermined distance threshold is a preset value determined by a system according to a type of the communication component or a predefined value determined by a user;
a data receiving module 1120, configured to receive interface data sent from the terminal device through the communication connection, wherein the interface data is data of a terminal interface displayed by the terminal device in real time;
a display module 1130, configured to display the terminal interface in a display screen according to the interface data;
a signal receiving module 1140, configured to receive a control signal of acting on the driving recorder, wherein the control signal is for controlling the terminal device; and
a control module 1150, configured to control the terminal device according to the control signal.

The data receiving module 1120 is further configured to: receive the interface data sent from the terminal device after the terminal device receives a notification message, wherein the interface data is data of the terminal interface displayed by the terminal device after the terminal device receives the notification message,
when the notification message is an incoming call message, the terminal interface displayed by the terminal device after receiving the notification message is an incoming call interface; when the notification message is a message such as a short message or an instant messaging message, the terminal interface displayed by the terminal device after receiving the notification message is an interface including prompt information for prompting reception of the notification message;
the interface data is data of pixel points of a display screen of the terminal device, and based on a corresponding relationship between pixel points of the display screen of the driving recorder and the pixel points of the display screen of the terminal device, the pixel points of the display screen of the driving recorder display the interface data of the pixel points of the display screen of the terminal device corresponding to the pixel points of the display screen of the driving recorder, wherein the corresponding relationship is a preset corresponding relationship between logical pixel points of the display screen of the driving recorder and logical pixel points of the display screen of the terminal device or is a corresponding relationship obtained by the driving recorder through adaptive calculation.

To sum up, according to the display apparatus provided by the embodiment of the present disclosure, after the driving recorder establishes a communication connection with a terminal device, interface data of the terminal device is received through the communication connection and displayed, thus displaying the terminal interface of the terminal device in a display screen of the driving recorder. The driving recorder may further receive a control operation and control the terminal device according to the control operation. Through the present disclosure, it solves a problem of large safety risk caused by a user operating his/her mobile phone in the process of driving. Since the user may directly view the message of the terminal device in the display screen of the driving recorder and perform appropriate operations during the driving process, without operating the terminal device, safety of driving is improved.

The above data receiving module 1120 is further configured to: receive the interface data sent from the terminal device after the terminal device receives a notification message, wherein the interface data is data of the terminal interface displayed by the terminal device after the terminal device receives the notification message.

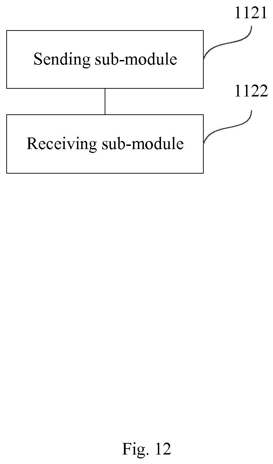

Optionally, the above data receiving module 1120 includes following sub-modules, as shown in Fig. 12:
a sending sub-module 1121, configured to, when it is determined that a vehicle in which the driving recorder is located is in a driving state, send an acquisition request to the terminal device through the communication connection; and
a receiving sub-module 1122, configured to receive the interface data returned by the terminal device according to the acquisition request.

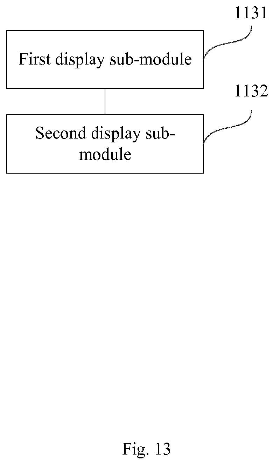

Optionally, the display screen is divided into a first display area and a second display area, a size of the first display area and a size of the second display area are identical or different, and the size of the first display area and the size of the second display area is preset by the user or the system, and the above data display module 1130 includes following sub-modules, as shown in Fig. 13:
a first display sub-module 1131, configured to display acquired driving data in the first display area of the display screen; and
a second display sub-module 1132, configured to display the interface data in the second display area of the display screen,
wherein the first display area and the second display area do not overlap each other.

Optionally, the above display module 1130 is further configured to: if the interface data is received during the display of the acquired driving data, switch to display the interface data.

Optionally, the above display module 1130 is further configured to: if a switching operation is received during the display of the acquired driving data, switch to display the interface data according to the switching operation.

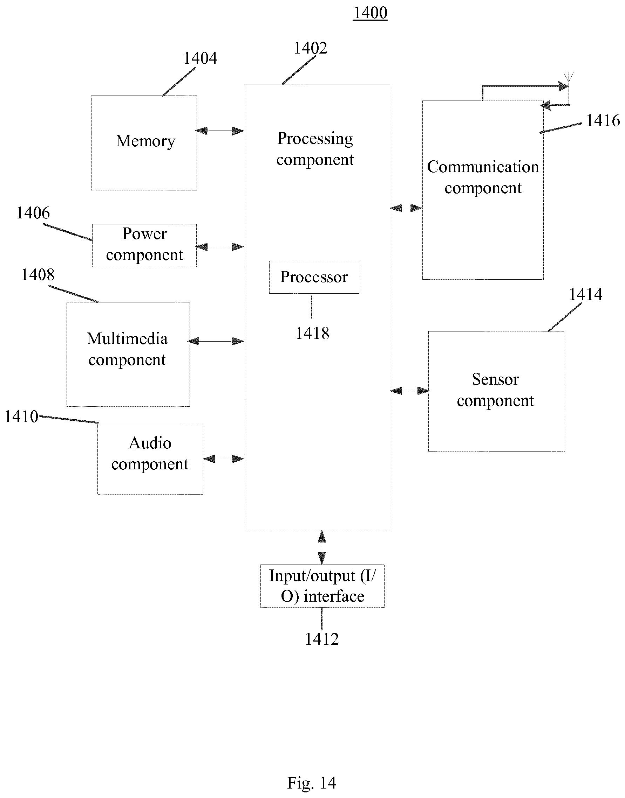

Fig. 14 is a structural schematic diagram of a driving recorder provided by an exemplary embodiment. Referring to Fig. 14, the apparatus 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the apparatus 1400, such as the operations associated with display, telephone calls, data communications, camera operations and recording operations. The processing component 1402 may include one or more processors 1418 to execute instructions to perform all or part of the steps in the above described methods. Moreover, the processing component 1402 may include one or more modules which may facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operations of the apparatus 1400. Examples of such data include instructions for any applications or methods operated on the apparatus 1400, contact data, phonebook data, messages, pictures, video, etc. The memory 1404 may be implemented by using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the apparatus 1400. The power component 1406 may include a power management system, one or more power sources, and any other components associated with the generation, management, and distribution of power in the apparatus 1400.

The multimedia component 1408 includes a screen providing an output interface between the apparatus 1400 and the user. In embodiments, the screen may include a liquid crystal display (LCD) and a touch panel (TP). If the screen includes the touch panel, the screen may be implemented as a touch display screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In an embodiment, the multimedia component 1408 includes a front camera and/or a rear camera. The front camera and the rear camera may receive an external multimedia datum while the apparatus 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone ("MIC") configured to receive an external audio signal when the apparatus 1400 is in an operation mode, such as a call mode, a recording mode, and a voice recognition mode. The received audio signal may be further stored in the memory 1404 or sent via the communication component 1416. In embodiments, the audio component 1410 further includes a speaker to output audio signals.

The I/O interface 1412 provides an interface between the processing component 1402 and peripheral interface modules, such as a keyboard, a click wheel, buttons, and the like. The buttons may include, but are not limited to, a home button, a volume button, a starting button, and a locking button.

The sensor component 1414 includes one or more sensors to provide state assessments of various aspects of the apparatus 1400. For instance, the sensor component 1414 may detect an open/closed state of the apparatus 1400, relative positioning of components, e.g., the display and the keypad, of the apparatus 1400, a change in position of the apparatus 1400 or a component of the apparatus 1400, a presence or absence of user contact with the apparatus 1400, an orientation or an acceleration/deceleration of the apparatus 1400, and a change in temperature of the apparatus 1400. The sensor component 1414 may include a proximity sensor configured to detect the presence of nearby objects without any physical contact. The sensor component 1414 may further include a light sensor, such as a CMOS or CCD image sensor, for use in imaging applications. In embodiments, the sensor component 1414 may further include an accelerometer sensor, a gyroscope sensor, a magnetic sensor, a pressure sensor or a temperature sensor.

The communication component 1416 is configured to facilitate communication, wired or wirelessly, between the apparatus 1400 and other apparatuses. The apparatus 1400 may access a wireless network based on a communication standard, such as WiFi, 2G, or 3G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1400 may be implemented with one or more application specific integrated circuits (ASICs), digital signal processors (DSPs), digital signal processing apparatuses (DSPDs), programmable logic apparatuses (PLDs), field programmable gate arrays (FPGAs), controllers, micro-controllers, microprocessors, or other electronic components, for performing the above method such as panorama shooting method.

In exemplary embodiments, there is further provided a non-transitory computer-readable storage medium including instructions, such as included in the memory 1404, executable by the processor 1418 in the apparatus 1400, for performing the above-described methods for synchronizing states. For example, the non-transitory computer-readable storage medium may be a ROM, a RAM, a CD-ROM, a magnetic tape, a floppy disc, an optical data storage apparatus, and the like.

## Claims

1. A display method, used in a driving recorder, comprising:
establishing (201) a communication connection with a terminal device through a communication component (113), wherein a distance between the terminal device and the driving recorder is less than a predetermined distance threshold, and the predetermined distance threshold is a preset value determined by a system according to a type of the communication component or a predefined value determined by a user;
receiving (202) interface data sent from the terminal device through the communication connection,
displaying (203) a terminal interface in a display screen of the driving recorder according to the interface data;
receiving (204) a control signal of acting on the driving recorder, wherein the control signal is for controlling the terminal device,
whereby the control signal is a touch signal of acting on the terminal interface displayed on the display screen of the driving recorder; and
controlling (202) the terminal device according to the control signal,
wherein receiving (202) interface data sent from the terminal device through the communication connection comprises:
receiving (302) the interface data sent from the terminal device after the terminal device receives a notification message, wherein the interface data is data of the terminal interface displayed by the terminal device after the terminal device receives the notification message,
whereby when the notification message is an incoming call message, the terminal interface displayed by the terminal device after receiving the notification message is an incoming call interface; when the notification message is a message such as a short message or an instant messaging message, the terminal interface displayed by the terminal device after receiving the notification message is an interface including prompt information for prompting reception of the notification message;
**characterized in that** the interface data is data of pixel points of a display screen of the terminal device, and based on a corresponding relationship between pixel points of the display screen of the driving recorder and the pixel points of the display screen of the terminal device, the pixel points of the display screen of the driving recorder display the interface data of the pixel points of the display screen of the terminal device corresponding to the pixel points of the display screen of the driving recorder, wherein the corresponding relationship is a preset corresponding relationship between logical pixel points of the display screen of the driving recorder and logical pixel points of the display screen of the terminal device or is a corresponding relationship obtained by the driving recorder through adaptive calculation.

2. The method according to claim 1, wherein receiving (202) interface data sent from the terminal device through the communication connection comprises:
when it is determined that a vehicle in which the driving recorder is located is in a driving state, sending (501) an acquisition request to the terminal device through the communication connection; and
receiving (502) the interface data returned by the terminal device according to the acquisition request.

3. The method according to any one of claims 1 to 2, wherein displaying (203) the terminal interface in the display screen of the driving recorder according to the interface data comprises:
if the interface data is received during display of the acquired driving data, switching to display the interface data.

4. The method according to any one of claims 1 to 2, wherein the display screen is divided into a first display area and a second display area, a size of the first display area and a size of the second display area are identical or different, and the size of the first display area and the size of the second display area is preset by the user or the system; wherein displaying (203) the terminal interface in the display screen of the driving recorder according to the interface data comprises:
displaying (601) acquired driving data in the first display area of the display screen; and
displaying (602) the interface data in the second display area of the display screen,
wherein the first display area and the second display area do not overlap each other.

5. The method according to any one of claims 1 to 2, wherein displaying (203) the terminal interface in the display screen of the driving recorder according to the interface data comprises:
if a switching operation is received during the display of the acquired driving data, switching to display the interface data according to the switching operation,
wherein the driving recorder displays a second entry in the display interface when displaying the driving data, and when the driving recorder determines that a switching operation is acting on the second entry, it switches to display the interface data.

6. A display apparatus, used in a driving recorder, comprising:
a connection establishing module (1110), configured to establish a communication connection with a terminal device through a communication component (113), wherein a distance between the terminal device and the driving recorder is less than a predetermined distance threshold, and the predetermined distance threshold is a preset value determined by a system according to a type of the communication component or a predefined value determined by a user;
a data receiving module (1120), configured to receive interface data sent from the terminal device through the communication connection;
a display module (1130), configured to display a terminal interface in a display screen of the driving recorder according to the interface data;
a signal receiving module (1140), configured to receive a control signal of acting on the driving recorder, wherein the control signal is for controlling the terminal device,
whereby the control signal is a touch signal of acting on the terminal interface displayed on the display screen of the driving recorder; and
a control module (1150), configured to control the terminal device according to the control signal,
wherein the data receiving module (1120) is further configured to: receive the interface data sent from the terminal device after the terminal device receives a notification message, wherein the interface data is data of the terminal interface displayed by the terminal device after the terminal device receives the notification message,
whereby when the notification message is an incoming call message, the terminal interface displayed by the terminal device after receiving the notification message is an incoming call interface; when the notification message is a message such as a short message or an instant messaging message, the terminal interface displayed by the terminal device after receiving the notification message is an interface including prompt information for prompting reception of the notification message;
**characterized in that** the interface data is data of pixel points of a display screen of the terminal device, and based on a corresponding relationship between pixel points of the display screen of the driving recorder and the pixel points of the display screen of the terminal device, the pixel points of the display screen of the driving recorder display the interface data of the pixel points of the display screen of the terminal device corresponding to the pixel points of the display screen of the driving recorder, wherein the corresponding relationship is a preset corresponding relationship between logical pixel points of the display screen of the driving recorder and logical pixel points of the display screen of the terminal device or is a corresponding relationship obtained by the driving recorder through adaptive calculation.

7. The apparatus according to claim 6, wherein the data receiving module (1120) comprises:
a sending sub-module (1121), configured to, when it is determined that a vehicle in which the driving recorder is located is in a driving state, send an acquisition request to the terminal device through the communication connection; and
a receiving sub-module (1122), configured to receive the interface data returned by the terminal device according to the acquisition request.

8. The apparatus according to any one of claims 6 to 7, wherein the display module (1130) is further configured to: if the interface data is received during display of the acquired driving data, switch to display the interface data.

9. The apparatus according to any one of claims 6 to 7, wherein the display screen is divided into a first display area and a second display area, a size of the first display area and a size of the second display area are identical or different, and the size of the first display area and the size of the second display area is preset by the user or the system; and the display module (1130) comprises:
a first display sub-module (1131), configured to display acquired driving data in the first display area of the display screen; and
a second display sub-module (1132), configured to display the interface data in the second display area of the display screen,
wherein the first display area and the second display area do not overlap each other.

10. The apparatus according to any one of claims 6 to 7, wherein the display module (1130) is further configured to: if a switching operation is received during the display of the acquired driving data, switch to display the interface data according to the switching operation,
wherein the driving recorder displays a second entry in the display interface when displaying the driving data, and when the driving recorder determines that a switching operation is acting on the second entry, it switches to display the interface data.

11. A computer program, which when executing on a processor of a driving recorder, performs the method according to any one of claims 1 to 5.

## Patentansprüche

1. Anzeigeverfahren, verwendet in einem Fahrdatenschreiber, mit den Schritten:
Herstellen (201) einer Kommunikationsverbindung mit einem Endgerät durch eine Kommunikationskomponente (113), wobei eine Entfernung zwischen dem Endgerät und dem Fahrdatenschreiber geringer als ein vorbestimmter Entfernungsschwellenwert ist, und der vorbestimmte Entfernungsschwellenwert ein vorgegebener Wert ist, welcher durch ein System gemäß einem Typ der Kommunikationskomponente bestimmt wird, oder ein von einem User bestimmter vordefinierter Wert;
Empfangen (202) von Interfacedaten von dem Endgerät über die Kommunikationsverbindung;
Anzeigen (203) eines Endgerätinterface in einem Anzeigebildschirm des Fahrdatenschreibers gemäß den Interfacedaten;
Empfangen (204) eines Steuersignals zum Agieren auf den Fahrdatenschreiber, wobei das Steuersignal dem Steuern des Endgeräts dient;
wobei das Steuersignal ein Touch-Signal zum Agieren auf das auf dem Anzeigebildschirm des Fahrdatenschreibers angezeigte Endgerät ist; und
Steuern (202) des Endgeräts gemäß dem Steuersignal,
wobei das Empfangen (202) von Interfacedaten, welche von dem Endgerät über die Kommunikationsverbindung gesendet werden, den folgenden Schritt aufweist:
Empfangen (302) der von dem Endgerät gesendeten Interfacedaten nachdem das Endgerät eine Mitteilungsnachricht empfangen hat, wobei die Interfacedaten Daten des Endgeräts sind, welche von dem Endgerät angezeigt werden, nachdem das Endgerät die Mitteilungsnachricht empfangen hat,
wobei, wenn die Mitteilungsnachricht eine eingehende Anrufnachricht ist, das Endgerätinterface, das von dem Endgerät nach dem Empfang der Mitteilungsnachricht angezeigt wird, ein Interface für eingehende Anrufe ist, wenn die Mitteilungsnachricht eine Nachricht wie eine Kurznachricht oder eine Instant Messaging-Nachricht ist, das von dem Endgerät nach dem Empfang der Mitteilungsnachricht angezeigte Endgerätinterface ein Interface ist, das Aufforderungsinformationen zum Veranlassen des Empfangs der Mitteilungsnachricht ist;
**dadurch gekennzeichnet, dass**
die Interfacedaten Daten von Pixelpunkten eines Anzeigebildschirms des Endgeräts sind, und basierend auf einer entsprechenden Beziehung zwischen Pixelpunkten des Anzeigebildschirms des Fahrdatenschreibers und den Pixelpunkten des Anzeigebildschirms des Endgeräts, die Pixelpunkte des Anzeigebildschirms des Fahrdatenschreibers die Interfacedaten der Pixelpunkte des Anzeigebildschirms des Endgeräts anzeigen, welche den Pixelpunkten des Anzeigebildschirms des Fahrdatenschreibers entsprechen, wobei die entsprechende Beziehung eine voreingestellte entsprechende Beziehung zwischen logischen Pixelpunkten des Anzeigebildschirms de Fahrdatenschreibers und logischen Pixelpunkten des Anzeigebildschirms des Endgeräts oder eine durch den Fahrdatenschreiber durch adaptive Berechnung erhaltene entsprechende Beziehung ist.

2. Verfahren nach Anspruch 1, bei welchem das Empfangen (202) von Interfacedaten, welche von dem Endgerät über die Kommunikationsverbindung gesendet werden, die folgenden Schritte aufweist:
wenn festgestellt wird, dass sich ein Fahrzeug, in welchem sich der Fahrdatenschreiber befindet, in einem Fahrzustand befindet, Senden (501) einer Erfassungsanfrage an das Endgerät über die Kommunikationsverbindung; und
Empfangen (502) der von dem Endgerät gemäß der Erfassungsanfrage zurückgesandten Interfacedaten.

3. Verfahren nach einem der Ansprüche 1 bis 2, bei welchem das Anzeigen (203) des Endgerätinterface in dem Anzeigebildschirm des Fahrdatenschreibers gemäß den Interfacedaten den folgenden Schritt aufweist:
wenn die Interfacedaten während des Anzeigens der erfassten Fahrdaten empfangen werden, Wechseln zum Anzeigen der Interfacedaten.

4. Verfahren nach einem der Ansprüche 1 bis 3, bei welchem der Anzeigebildschirm in einen ersten Anzeigebildschirmbereich und einen zweiten Bildschirmbereich unterteilt ist, eine Größe des ersten Bildschirmbereichs und eine Größe des zweiten Bildschirmbereichs identisch oder unterschiedlich sind, und die Größe des ersten Bildschirmbereichs und die Größe des zweiten Bildschirmbereichs von dem Benutzer oder dem System voreingestellt wird; wobei das Anzeigen (203) des Endgerätinterface in dem Anzeigebildschirm des Fahrdatenschreibers gemäß den Interfacedaten die folgenden Schritte aufweist:
Anzeigen (601) erfasster Fahrdaten in dem ersten Anzeigebereich des Anzeigebildschirms; und
Anzeigen (602) der Interfacedaten in dem zweiten Anzeigebereich des Anzeigebildschirms, wobei der erste Anzeigebereich und der zweite Anzeigebereich einander nicht überlappen.

5. Verfahren nach einem der Ansprüche 1 bis 2, bei welchem das Anzeigen (203) des Endgerätinterface in dem Anzeigebildschirm des Fahrdatenschreibers gemäß den Interfacedaten den folgenden Schritt aufweist:
wenn eine Wechseloperation während der Anzeige der erfassten Fahrdaten empfangen wird, Wechseln zum Anzeigen der Interfacedaten gemäß der Wechseloperation;
wobei der Fahrdatenschreiber beim Anzeigen der Fahrdaten einen zweiten Eintrag in dem Anzeigeinterface anzeigt, und wenn der Fahrdatenschreiber feststellt, dass eine Wechseloperation auf den zweiten Eintrag wirkt, der Fahrdatenschreiber zum Anzeigen der Interfacedaten wechselt.

6. Anzeigevorrichtung, verwendet in einem Fahrdatenschreiber, mit:
einem Verbindungsherstellungsmodul (1110), das zum Herstellen einer Kommunikationsverbindung mit einem Endgerät durch eine Kommunikationskomponente (113) ausgebildet ist, wobei eine Entfernung zwischen dem Endgerät und dem Fahrdatenschreiber geringer als ein vorbestimmter Entfernungsschwellenwert ist, und der vorbestimmte Entfernungsschwellenwert ein vorgegebener Wert ist, welcher durch ein System gemäß einem Typ der Kommunikationskomponente bestimmt wird, oder ein von einem User bestimmter vordefinierter Wert;
einem Datenempfangsmodul (1120), das zum Empfangen von Interfacedaten von dem Endgerät über die Kommunikationsverbindung ausgebildet ist;
einem Anzeigemodul (1130), das zum Anzeigen eines Endgerätinterface in einem Anzeigebildschirm des Fahrdatenschreibers gemäß den Interfacedaten ausgebildet ist;
einem Signalempfangsmodul (1140), das zum Empfangen eines Steuersignals zum Agieren auf den Fahrdatenschreiber ausgebildet ist, wobei das Steuersignal dem Steuern des Endgeräts dient;
wobei das Steuersignal ein Touch-Signal zum Agieren auf das auf dem Anzeigebildschirm des Fahrdatenschreibers angezeigte Endgerät ist; und
einem Steuermodul (1150), das zum Steuern (202) des Endgeräts gemäß dem Steuersignal ausgebildet ist,
wobei das Datenempfangsmodul (1120) ferner dazu ausgebildet ist, die von dem Endgerät gesendeten Interfacedaten zu empfangen, nachdem das Endgerät eine Mitteilungsnachricht empfangen hat, wobei die Interfacedaten Daten des Endgeräts sind, welche von dem Endgerät angezeigt werden, nachdem das Endgerät die Mitteilungsnachricht empfangen hat,
wobei, wenn die Mitteilungsnachricht eine eingehende Anrufnachricht ist, das Endgerätinterface, das von dem Endgerät nach dem Empfang der Mitteilungsnachricht angezeigt wird, ein Interface für eingehende Anrufe ist, wenn die Mitteilungsnachricht eine Nachricht wie eine Kurznachricht oder eine Instant Messaging-Nachricht ist, das von dem Endgerät nach dem Empfang der Mitteilungsnachricht angezeigte Endgerätinterface ein Interface ist, das Aufforderungsinformationen zum Veranlassen des Empfangs der Mitteilungsnachricht ist;
**dadurch gekennzeichnet, dass**
die Interfacedaten Daten von Pixelpunkten eines Anzeigebildschirms des Endgeräts sind, und basierend auf einer entsprechenden Beziehung zwischen Pixelpunkten des Anzeigebildschirms des Fahrdatenschreibers und den Pixelpunkten des Anzeigebildschirms des Endgeräts, die Pixelpunkte des Anzeigebildschirms des Fahrdatenschreibers die Interfacedaten der Pixelpunkte des Anzeigebildschirms des Endgeräts anzeigen, welche den Pixelpunkten des Anzeigebildschirms des Fahrdatenschreibers entsprechen, wobei die entsprechende Beziehung eine voreingestellte entsprechende Beziehung zwischen logischen Pixelpunkten des Anzeigebildschirms de Fahrdatenschreibers und logischen Pixelpunkten des Anzeigebildschirms des Endgeräts oder eine durch den Fahrdatenschreiber durch adaptive Berechnung erhaltene entsprechende Beziehung ist.

7. Vorrichtung nach Anspruch 6, bei welcher das Datenempfangsmodul (1120) aufweist:
ein Sende-Submodul (1121), das dazu ausgebildet ist, wenn festgestellt wird, dass sich ein Fahrzeug, in welchem sich der Fahrdatenschreiber befindet, in einem Fahrzustand befindet, eine Erfassungsanfrage an das Endgerät über die Kommunikationsverbindung zu senden; und
ein Empfangs-Submodul (1122), das zum Empfangen der von dem Endgerät gemäß der Erfassungsanfrage zurückgesandten Interfacedaten ausgebildet ist.

8. Vorrichtung nach einem der Ansprüche 6 bis 7, bei welcher das Anzeigemodul (1130) ferner dazu ausgebildet ist, wenn die Interfacedaten während des Anzeigens der erfassten Fahrdaten empfangen werden, zum Anzeigen der Interfacedaten zu wechseln.

9. Vorrichtung nach einem der Ansprüche 6 bis 7, bei welcher der Anzeigebildschirm in einen ersten Anzeigebildschirmbereich und einen zweiten Bildschirmbereich unterteilt ist, eine Größe des ersten Bildschirmbereichs und eine Größe des zweiten Bildschirmbereichs identisch oder unterschiedlich sind, und die Größe des ersten Bildschirmbereichs und die Größe des zweiten Bildschirmbereichs von dem Benutzer oder dem System voreingestellt wird; und wobei das Anzeigemodul (1130) aufweist:
ein erstes Anzeige-Submodul (1131), das zum Anzeigen erfasster Fahrdaten in dem ersten Anzeigebereich des Anzeigebildschirms ausgebildet ist; und
ein zweites Anzeige-Submodul (1132), das zum Anzeigen der Interfacedaten in dem zweiten Anzeigebereich des Anzeigebildschirms ausgebildet ist,
wobei der erste Anzeigebereich und der zweite Anzeigebereich einander nicht überlappen.

10. Vorrichtung nach einem der Ansprüche 6 bis 7, bei welcher das Anzeigemodul (1130) ferner dazu ausgebildet ist,
wenn eine Wechseloperation während der Anzeige der erfassten Fahrdaten empfangen wird, zum Anzeigen der Interfacedaten gemäß der Wechseloperation zu wechseln;
wobei der Fahrdatenschreiber beim Anzeigen der Fahrdaten einen zweiten Eintrag in dem Anzeigeinterface anzeigt, und wenn der Fahrdatenschreiber feststellt, dass eine Wechseloperation auf den zweiten Eintrag wirkt, der Fahrdatenschreiber zum Anzeigen der Interfacedaten wechselt.

11. Computerprogramm, welches bei Ausführung auf einem Prozessor eines Fahrdatenschreibers das Verfahren nach einem der Ansprüche 1 bis 5 ausführt.

## Revendications

1. Procédé d'affichage, utilisé dans un enregistreur de conduite, comprenant:
l'établissement (201) d'une connexion de communication avec un dispositif terminal via un composant de communication (113), dans lequel une distance entre le dispositif terminal et l'enregistreur de conduite est inférieure à un seuil de distance prédéterminé, et le seuil de distance prédéterminé est une valeur prédéfinie déterminée par un système en fonction d'un type du composant de communication ou une valeur prédéfinie déterminée par un utilisateur;
la réception (202) de données d'interface envoyées par le dispositif terminal via la connexion de communication,
l'affichage (203) d'une interface de terminal sur un écran d'affichage de l'enregistreur de conduite en fonction des données d'interface;
la réception (204) d'un signal de commande d'action sur l'enregistreur de conduite, dans lequel le signal de commande est pour commander le dispositif terminal,
de sorte que le signal de commande est un signal tactile d'action sur l'interface de terminal affichée sur l'écran d'affichage de l'enregistreur de conduite; et
la commande (202) du dispositif terminal en fonction du signal de commande,
dans lequel la réception (202) de données d'interface envoyées par le dispositif terminal via la connexion de communication comprend:
la réception (302) des données d'interface envoyées par le dispositif terminal après que le dispositif terminal reçoive un message de notification, dans lequel les données d'interface sont des données de l'interface de terminal affichée par le dispositif terminal après que le dispositif terminal reçoive le message de notification,
de sorte que lorsque le message de notification est un message d'appel entrant, l'interface de terminal affichée par le dispositif terminal après réception du message de notification est une interface d'appel entrant; lorsque le message de notification est un message tel qu'un court message ou un message de messagerie instantanée, l'interface de terminal affichée par le dispositif terminal après réception du message de notification est une interface incluant des informations de demande pour demander la réception du message de notification;
**caractérisé en ce que** les données d'interface sont des données de points de pixels d'un écran d'affichage du dispositif terminal, et basées sur une relation de correspondance entre les points de pixels de l'écran d'affichage de l'enregistreur de conduite et les points de pixels de l'écran d'affichage du dispositif terminal, les points de pixels de l'écran d'affichage de l'enregistreur de conduite affichent les données d'interface des points de pixels de l'écran d'affichage du dispositif terminal correspondant aux points de pixels de l'écran d'affichage de l'enregistreur de conduite, dans lequel la relation de correspondance est une relation de correspondance prédéfinie entre les points de pixels logiques de l'écran d'affichage de l'enregistreur de conduite et les points de pixels logiques de l'écran d'affichage du dispositif terminal ou est une relation de correspondance obtenue par l'enregistreur de conduite par calcul adaptatif.

2. Procédé selon la revendication 1, dans lequel la réception (202) des données d'interface envoyées par le dispositif terminal via la connexion de communication comprend:
lorsqu'il est déterminé qu'un véhicule dans lequel se trouve l'enregistreur de conduite est dans un état de conduite, l'envoi (501) d'une requête d'acquisition au dispositif terminal via la connexion de communication; et
la réception (502) des données d'interface renvoyées par le dispositif terminal conformément à la requête d'acquisition.

3. Procédé selon l'une quelconque des revendications 1 à 2, dans lequel l'affichage (203) de l'interface de terminal sur l'écran d'affichage de l'enregistreur de conduite en fonction des données d'interface comprend:
si les données d'interface sont reçues pendant l'affichage des données de conduite acquises, la commutation vers l'affichage des données d'interface.

4. Procédé selon l'une quelconque des revendications 1 à 2, dans lequel l'écran d'affichage est divisé en une première zone d'affichage et une seconde zone d'affichage, une taille de la première zone d'affichage et une taille de la seconde zone d'affichage sont identiques ou différentes, et la taille de la première zone d'affichage et la taille de la seconde zone d'affichage sont prédéfinies par l'utilisateur ou le système; dans lequel l'affichage (203) de l'interface de terminal sur l'écran d'affichage de l'enregistreur de conduite en fonction des données d'interface comprend:
l'affichage (601) de données de conduite acquises dans la première zone d'affichage de l'écran d'affichage; et
l'affichage (602) des données d'interface dans la seconde zone d'affichage de l'écran d'affichage,
dans lequel la première zone d'affichage et la seconde zone d'affichage ne se chevauchant pas.

5. Procédé selon l'une quelconque des revendications 1 à 2, dans lequel l'affichage (203) de l'interface de terminal sur l'écran d'affichage de l'enregistreur de conduite en fonction des données d'interface comprend:
si une opération de commutation est reçue pendant l'affichage des données de conduite acquises, la commutation vers l'affichage des données d'interface en fonction de l'opération de commutation,
dans lequel l'enregistreur de conduite affiche une seconde entrée sur l'interface d'affichage lors de l'affichage des données de conduite, et lorsque l'enregistreur de conduite détermine qu'une opération de commutation agit sur la seconde entrée, il commute vers l'affichage des données d'interface.

6. Appareil d'affichage, utilisé dans un enregistreur de conduite, comprenant:
un module d'établissement de connexion (1110), configuré pour établir une connexion de communication avec un dispositif terminal via un composant de communication (113), dans lequel une distance entre le dispositif terminal et l'enregistreur de conduite est inférieure à un seuil de distance prédéterminé, et le seuil de distance prédéterminé est une valeur prédéfinie déterminée par un système en fonction d'un type du composant de communication ou une valeur prédéfinie déterminée par un utilisateur;
un module de réception de données (1120), configuré pour recevoir des données d'interface envoyées par le dispositif terminal via la connexion de communication;
un module d'affichage (1130), configuré pour afficher une interface de terminal sur un écran d'affichage de l'enregistreur de conduite en fonction des données d'interface;
un module de réception de signal (1140), configuré pour recevoir un signal de commande d'action sur l'enregistreur de conduite, dans lequel le signal de commande est pour commander le dispositif terminal,
de sorte que le signal de commande est un signal tactile d'action sur l'interface de terminal affichée sur l'écran d'affichage de l'enregistreur de conduite; et
un module de commande (1150), configuré pour commander le dispositif terminal en fonction du signal de commande,
dans lequel le module de réception de données (1120) est configuré en outre pour: recevoir les données d'interface envoyées par le dispositif terminal après que le dispositif terminal reçoive un message de notification, dans lequel les données d'interface sont des données de l'interface de terminal affichée par le dispositif terminal après que le dispositif terminal reçoive le message de notification,
de sorte que lorsque le message de notification est un message d'appel entrant, l'interface de terminal affichée par le dispositif terminal après réception du message de notification est une interface d'appel entrant; lorsque le message de notification est un message tel qu'un court message ou un message de messagerie instantanée, l'interface de terminal affichée par le dispositif terminal après réception du message de notification est une interface incluant des informations de demande pour demander la réception du message de notification;
**caractérisé en ce que** les données d'interface sont des données de points de pixels d'un écran d'affichage du dispositif terminal, et basées sur une relation de correspondance entre les points de pixels de l'écran d'affichage de l'enregistreur de conduite et les points de pixels de l'écran d'affichage du dispositif terminal, les points de pixels de l'écran d'affichage de l'enregistreur de conduite affichent les données d'interface des points de pixels de l'écran d'affichage du dispositif terminal correspondant aux points de pixels de l'écran d'affichage de l'enregistreur de conduite, dans lequel la relation de correspondance est une relation de correspondance prédéfinie entre les points de pixels logiques de l'écran d'affichage de l'enregistreur de conduite et les points de pixels logiques de l'écran d'affichage du dispositif terminal ou est une relation de correspondance obtenue par l'enregistreur de conduite par calcul adaptatif.

7. Appareil selon la revendication 6, dans lequel le module de réception de données (1120) comprend:
un sous-module d'envoi (1121), configuré pour, lorsqu'il est déterminé qu'un véhicule dans lequel se trouve l'enregistreur de conduite est dans un état de conduite, envoyer une requête d'acquisition au dispositif terminal via la connexion de communication; et
un sous-module de réception (1122), configuré pour recevoir les données d'interface renvoyées par le dispositif terminal conformément à la requête d'acquisition.

8. Appareil selon l'une quelconque des revendications 6 à 7, dans lequel le module d'affichage (1130) est configuré en outre pour: si les données d'interface sont reçues pendant l'affichage des données de conduite acquises, commuter vers l'affichage des données d'interface.

9. Appareil selon l'une quelconque des revendications 6 à 7, dans lequel l'écran d'affichage est divisé en une première zone d'affichage et une seconde zone d'affichage, une taille de la première zone d'affichage et une taille de la seconde zone d'affichage sont identiques ou différentes, et la taille de la première zone d'affichage et la taille de la seconde zone d'affichage sont prédéfinies par l'utilisateur ou le système; et le module d'affichage (1130) comprend:
un premier sous-module d'affichage (1131), configuré pour afficher des données de conduite acquises dans la première zone d'affichage de l'écran d'affichage; et
un second sous-module d'affichage (1132), configuré pour afficher les données d'interface dans la seconde zone d'affichage de l'écran d'affichage,
dans lequel la première zone d'affichage et la seconde zone d'affichage ne se chevauchent pas.

10. Appareil selon l'une quelconque des revendications 6 à 7, dans lequel le module d'affichage (1130) est configuré en outre pour: si une opération de commutation est reçue pendant l'affichage des données de conduite acquises, commuter vers l'affichage des données d'interface en fonction de l'opération de commutation,
dans lequel l'enregistreur de conduite affiche une seconde entrée dans l'interface d'affichage lors de l'affichage des données de conduite, et lorsque l'enregistreur de conduite détermine qu'une opération de commutation agit sur la seconde entrée, il commute vers l'affichage des données d'interface.

11. Programme informatique, qui, lors de l'exécution sur un processeur d'un enregistreur de conduite, met en œuvre le procédé selon l'une quelconque des revendications 1 à 5.
